# EUROPÄISCHE PATENTSCHRIFT

(11) **EP 2 368 665 B1**
(45) Veröffentlichungstag und Bekanntmachung des Hinweises auf die Patenterteilung: **23.10.2013**
(21) Anmeldenummer: 11002517.8
(22) Anmeldetag: 25.03.2011
(51) Int. Cl.: B23Q 1/56, B23Q 1/58, B23Q 3/157

(54) **Speichereinrichtung**
Storage device
Dispositif de stockage

(30) Priorität: 26.03.2010 DE 102010013109
(43) Veröffentlichungstag der Anmeldung: 28.09.2011
(73) Patentinhaber: MWA Magdeburger Werkzeugmaschinen & Automation GmbH, 39122 Magdeburg (DE)
(72) Erfinder: Hochegger, Helmut, 8200 Gleisdorf (AT)
(74) Vertreter: Sparing, Rolf Klaus

(56) Entgegenhaltungen:
- CH-A- 489 327
- DE-A1- 19 851 264
- US-A- 5 121 539

## Beschreibung

Die Erfindung betrifft eine Speichereinrichtung zur Zwischenlagerung von Werkzeugen zwischen einem Werkzeugmagazin und einer Werkzeugmaschine, eine Werkzeugpufferanordnung mit einer Speichereinrichtung, sowie die Verwendung einer Speichereinrichtung.

CH 489 327 A beschreibt eine Werkzeugtransportvorrichtung, die zum Transport von Werkzeugen zwischen einem Werkzeugmagazin und einer Arbeitsspindel einer Werkzeugmaschine ausgebildet ist. Die Werkzeugtransportvorrichtung umfasst ein erstes Speicherelement und ein zweites Speicherelement zur Aufnahme jeweils eines Werkzeugs. Die Speicherelemente sind jeweils als Greifelement ausgebildet und verlagerbar an einem Schlitten aufgenommen, der zwischen dem Werkzeugmagazin und der Arbeitsspindel der Werkzeugmaschine hin- und herbewegbar ist. Zum Austausch eines Werkzeugs in der Arbeitsspindel der Werkzeugmaschine wird die Werkzeugtransportvorrichtung in eine Werkzeugaustauschposition zu dem Werkzeugmagazin bewegt und ein in die Arbeitsspindel einzusetzendes Werkzeug an das erste Speicherelement übergeben. Anschließend werden das erste Speicherelement und das zweite Speicherelement mittels des Schlittens gemeinsam in eine Werkzeugübergabeposition zu der Werkzeugmaschine bewegt. Ein in der Arbeitsspindel aufgenommenes Werkzeug wird mittels des zweiten Speicherelements aus der Arbeitsspindel entnommen und das in dem ersten Speicherelement aufgenommene, zu verwendende Werkzeug wird mittels des ersten Speicherelements in die Arbeitsspindel eingesetzt. Anschließend werden das erste Speicherelement und das zweite Speicherelement mittels des Schlittens gemeinsam zurück in die Werkzeugaustauschposition bewegt, wo das zweite Speicherelement das benutzte Werkzeug an das Werkzeugmagazin übergibt. Nachteilig ist, dass ein Austausch des Werkzeugs in der Arbeitsspindel wegen des langen Transportwegs des Werkzeugs zwischen dem Werkzeugmagazin und der Werkzeugmaschine nur langsam erfolgt. Insbesondere, wenn ein Werkzeug in der Arbeitsspindel nur für sehr kurze Zeit verwendet wird, entstehen zwischen den Werkzeugwechseln ungewünschte Wartezeiten, bis das nächste, zu verwendende Werkzeug für einen Austausch bereitgestellt wird.

DE 198 51 264 A1 beschreibt eine Werkzeugmaschine mit zwei Arbeitsspindeln, einem Werkzeugmagazin für Werkzeuge und zwei Zwischenspeichern für Werkzeuge. Jeweils ein Zwischenspeicher ist genau einer der Arbeitsspindeln zugeordnet und dient dazu, Werkzeuge bei einem Transport zwischen dem Werkzeugmagazin und der Arbeitsspindel zu speichern. Das Werkzeugmagazin umfasst ein oval angeordnetes Schienensystem mit einer Vielzahl von auf dem Schienensystem geführten Schlitten, wobei auf jedem der Schlitten jeweils ein Werkzeug lösbar gehalten ist. Die Schlitten können entlang des Schienensystems verlagert werden. Das ovale Schienensystem weist eine geradlinig verlaufende Frontseite auf, der gegenüberliegend die Arbeitsspindeln angeordnet sind. Die Zwischenspeicher sind zwischen der Frontseite des Schienensystems und den Arbeitsspindeln angeordnet und umfassen jeweils eine zu der Frontseite des Schienensystems parallel verlaufende Schiene. Die Schiene jedes der Zwischenspeicher weist mittig eine Lücke auf. Ebenso weist das Schienensystem an seiner Frontseite zwei Lücken auf, die den Lücken der Schienen der Zwischenspeicher gegenüberliegen. Im Bereich der sich paarweise gegenüberstehenden Lücken ist jeweils eine Werkzeugwechselvorrichtung angeordnet, die ein erstes Schienenstück aufweist. Das erste Schienenstück ist so bemessen, dass es jeweils nahtlos sowohl in die Lücke des jeweiligen Zwischenspeichers als auch in die jeweilige Lücke der Frontseite des Schienensystems eingefügt werden kann. Das erste Schienenstück kann jeweils einen Schlitten mit einem Werkzeug aufnehmen und mittels der Werkzeugwechselvorrichtung zwischen dem Schienensystem und dem Zwischenspeicher verlagert werden, um aufgenommene Werkzeuge zwischen dem Schienensystem und dem Zwischenspeicher zu transportieren. Die Werkzeugwechselvorrichtungen weisen zusätzlich jeweils ein zweites Schienenstück auf, das immer dann, wenn das erste Schienenstück in den Zwischenspeicher eingesetzt ist, die Lücke in der Frontseite des Schienensystems schließt, um so eine ungestörte Bewegung der Schlitten innerhalb des ovalen Schienensystems zu ermöglichen. Um einen Werkzeugwechsel in den Arbeitsspindeln durchzuführen, können diese unabhängig voneinander jeweils zwischen ihrer Arbeitsposition und dem ihnen zugeordneten Zwischenspeicher bewegt werden, um ein Werkzeug aus dem Zwischenspeicher zu entnehmen oder ein benutztes Werkzeug im Zwischenspeicher abzulegen.

DD 250 882 A1 beschreibt ein automatisches Werkzeugwechselsystem für eine Werkzeugmaschine. Das Werkzeugwechselsystem umfasst eine Mehrzahl von Speichervorrichtungen für Werkzeuge, wobei in jeder Speichervorrichung jeweils ein Werkzeug der Werkzeugmaschine in einer Werkzeugaufnahme aufnehmbar ist. Die Werkzeuge werden mittels eines Schnellspannfutters aus der Werkzeugaufnahme entnommen bzw. in diese eingesetzt. Zur automatischen Betätigung des Schnellspannfutters weist jede der Speichervorrichtungen eine Betätigungseinrichtung auf.

DE 20 2006 015 240 U1 beschreibt eine Werkzeugmaschine mit einer ersten Werkzeugspindel und einer zweiten Werkzeugspindel. Die Werkzeugspindeln sind gemeinsam auf einem in horizontaler und vertikaler Richtung verlagerbaren Schlitten aufgenommen. Die Werkzeugmaschine umfasst weiter ein Werkzeugmagazin und einen Zwischenspeicher für Werkzeuge. Der Zwischenspeicher weist zwei Speichereinheiten mit je zwei Speicherpositionen auf, so dass insgesamt bis zu vier Werkzeuge gleichzeitig in den Zwischenspeicher aufgenommen werden können. Die Werkzeugspindeln sind mittels des Schlittens zu den Speichereinheiten verlagerbar, um dort Werkzeuge neu aufzunehmen oder in den Zwischenspeicher abzugeben. Die Werkzeugmaschine umfasst ferner zwei Transporteinrichtungen, die unabhängig voneinander bewegbar sind und jeweils ein Werkzeug innerhalb des Werkzeugmagazins oder zwischen dem Werkzeugmagazin und dem Zwischenspeicher transportieren können. Nachteilig ist, dass für einen Werkzeugwechsel beide Arbeitsspindeln jeweils gemeinsam zu dem Zwischenspeicher bewegt werden müssen, was zu hohen Werkzeugwechselzeiten führt und eine aufwändige und somit teure Antriebs-und Führungsvorrichtung für die Arbeitsspindeln notwendig macht. Ein schneller Werkzeugaustausch in den Arbeitsspindeln ist somit nicht realisierbar.

US 5 121 539 A beschreibt eine Werkzeugmaschine zur Bearbeitung von Metallblechen, umfassend eine Speichereinrichtung zur Zwischenlagerung von Werkzeugen mit einem Werkzeugmagazin, eine Werkzeugwechseleinrichtung mit einem ersten Speicherelement und einem zweiten Speicherelement zur Aufnahme von Werkzeugkasetten, die entlang von zwei Führungseinrichtungen mittels zweier Antriebsvorrichtungen zwischen dem Werkzeugmagazin und einer Werkzeugantriebseinrichtung verlagerbar sind. Die Werkzeugkasetten sind innerhalb des Werkzeugmagazins auf einer verfahrbaren Werkzeugplattform mittels Positionier- und Befestigungsmitteln in Werkzeugaustauschpositionen gehalten. Zum Austausch einer Werkzeugkasette in der Werkzeugantriebseinrichtung wird das erste Speicherelement entlang der ersten Führungseinrichtung in eine Werkzeugübergabeposition verlagert und nimmt eine in der Werkzeugantriebseinrichtung befindliche erste Werkzeugkasette mittels eines Greifelements an einer Führungsplatte der ersten Werkzeugkasette auf. Das erste Speicherelement wird sodann in eine erste Werkzeugaustauschposition verlagert und positioniert die erste Werkzeugkasette auf dem Werkzeugtisch, wobei sich das Greifelement von der Führungsplatte löst. Das zweite Speicherelement wird entlang der zweiten Führungseinrichtung in eine zweite Werkzeutaustauschposition verlagert und nimmt eine zweite Werkzeugkasette auf. Anschließend wird das zweite Speicherelement in die Werkzeugübergabeposition verlagert und positioniert die zweite Werkzeugkasette in der Werkzeugantriebseinrichtung.

Es ist die Aufgabe der Erfindung, Werkzeugwechselzeiten und die erforderliche Werkzeugvorbereitungszeit beim Austausch eines Werkzeugs in einer Werkzeugmaschine zu verkürzen.

Diese Aufgabe wird erfindungsgemäß durch eine Speichereinrichtung mit den Merkmalen des Anspruchs 1, eine Werkzeugpufferanordnung mit den Merkmalen des Anspruchs 7, ein Verfahren mit den Merkmalen des Anspruchs 10 und eine Verwendung mit den Merkmalen des Anspruchs 14 gelöst.

Dadurch, dass das erste Speicherelement und das zweite Speicherelement unabhängig voneinander zwischen Werkzeugaustauschposition und Werkzeugübergabeposition verlagerbar sind, werden Wartezeiten bei einem Werkzeugwechsel vermieden, da das nächste benötigte Werkzeug jeweils von einem der Speicherelemente bereitgehalten wird, während das andere Speicherelement das gebrauchte Werkzeug aufnimmt. Es versteht sich, dass eine unabhängige Bewegung der Speicherelemente in einem derartigen Rahmen erfolgt, dass Kollisionen zwischen bewegten Werkzeugen vermieden werden. Zweckmäßig werden Werkzeuge an der ersten Werkzeugaustauschposition und der zweiten Werkzeugaustauschposition mittels einer Werkzeugtransportvorrichtung bereitgestellt, die die Werkzeuge zwischen einem Werkzeugmagazin und der Speichereinrichtung transportiert, so dass die Speichereinrichtung relativ kompakt aufgebaut und in räumlicher Nähe zu der Arbeitsspindel angeordnet ist. Die Wege des ersten Speicherelements und des zweiten Speicherelements zwischen der ersten bzw. zweiten Werkzeugaustauschposition und der Werkzeugübergabeposition können so vorteilhaft kurz gehalten werden, was kurze Bewegungszeiten und damit einen raschen Werkzeugwechsel sicherstellt.

Erfindungsgemäß ist das erste Speicherelement und/oder das zweite Speicherelement entlang einer ortsfesten Führungsvorrichtung verlagerbar ist. Dies ermöglicht ein präzises und mechanisch stabiles Bewegen des ersten und/oder zweiten Speicherelements zwischen der Werkzeugaustauschposition und der Werkzeugübergabeposition, so dass hohe Bewegungsgeschwindigkeiten erzielbar sind und eine präzise Übergabe der Werkzeuge an und von den Speicherelementen sichergestellt ist.

Vorzugsweise ist das erste Speicherelement und/oder das zweite Speicherelement jeweils entlang einer separaten Führungsvorrichtung verlagerbar. Dies ermöglicht vorteilhaft ein individuelles Justieren der Führungsvorrichtung und damit der Bewegungsbahn der Speicherelemente. Die Speichereinrichtung kann so flexibel an vorgegebene Platzverhältnisse oder die Abmessungen von Werkzeugen angepasst werden, was insbesondere bei einem Nachrüsten bestehender Werkzeugmaschinen mit der Speichereinrichtung vorteilhaft ist.

Zweckmäßig weist das erste Speicherelement und/oder das zweite Speicherelement eine an die Werkzeuge angepasste Werkzeugaufnahme auf. Besonders bevorzugt handelt es sich um eine standardisierte Werkzeugaufnahme, die mit einer Vielzahl von Werkzeugtypen mit standardisierter Halterung verwendbar ist. Alternativ hierzu kann ein bewegbares Greifelement vorgesehen sein, dass jeweils mit einer Vielzahl von individuell geformten Werkzeugen verwendbar ist.

Bevorzugt weist das erste Speicherelement und/oder das zweite Speicherelement eine jeweils separate Antriebsvorrichtung zum Antrieb einer Verlagerungsbewegung zwischen der Werkzeugaustauschposition und der Werkzeugübergabeposition auf. Dies ermöglicht auf besonders einfache Weise eine individuelle Steuerung und Bewegung der Speicherelemente. Alternativ kann eine gemeinsame Antriebsvorrichtung vorgesehen sein, wobei jedoch eine unabhängige Ansteuerung der Speicherelemente beispielsweise durch eine steuerbare Entkopplung der Speicherelemente von der gemeinsamen Antriebsvorrichtung vorgesehen ist.

Eine zuverlässige Antriebsvorrichtung wird insbesondere durch Ausbildung als Zahnriemenantrieb, Spindelantrieb, Kettenantrieb, elektromotorischer Antrieb oder pneumatischer Antrieb erreicht.

Eine erfindungsgemäße Werkzeugpufferanordnung enthält eine Speichereinrichtung der vorgenannten Art zur Zwischenlagerung von Werkzeugen, so dass Wartezeiten beim Werkzeugwechsel auf das nachfolgende einzusetzende Werkzeug vorteilhaft reduziert oder vollständig vermieden werden.

Zweckmäßig umfasst die Werkzeugpufferanordnung eine der Werkzeugübergabeposition zugeordnete Übergabevorrichtung, mittels der Werkzeuge in die Arbeitsspindel eingesetzt oder aus dieser entnommen werden.

Besonders bevorzugt ist die Übergabevorrichtung als wenigstens zweiarmiger Drehhebel ausgebildet. Je nach Maschinentyp, kann das Werkzeug auch direkt mit der Spindel aus dem Werkzeugpuffer entnommen oder auch wieder abgegeben werden.

Zweckmäßig umfasst die Werkzeugpufferanordnung eine wenigstens einer von erster Werkzeugaustauschposition und zweiter Werkzeugaustauschposition zugeordnete Werkzeugtransportvorrichtung. Besonders zweckmäßig können sowohl die erste Werkzeugaustauschposition als auch die zweite Werkzeugaustauschposition mittels einer gemeinsamen Werkzeugtransportvorrichtung angesteuert werden.

Die erfindungsgemäße Verwendung zum Austausch eines Werkzeugs in einer Werkzeugmaschine enthält die Schritte Übergeben eines ersten Werkzeugs von einem Werkzeugmagazin an ein erstes Speicherelement in einer räumlich definierten ersten Werkzeugaustauschposition, Übergeben eines zweiten Werkzeugs aus einer Werkzeugmaschine an ein zweites Speicherelement in einer räumlich definierten Werkzeugübergabeposition, Übergeben des ersten Werkzeugs von dem ersten Speicherelement an die Werkzeugmaschine in der Werkzeugübergabeposition, und Übergeben des zweiten Werkzeugs von dem zweiten Speicherelement an das Werkzeugmagazin in einer räumlich definierten zweiten Werkzeugaustauschposition, wobei eine Bewegung des ersten Speicherelements zwischen der ersten Werkzeugaustauschposition und der Werkzeugübergabeposition und eine Bewegung des zweiten Speicherelements zwischen der zweiten Werkzeugaustauschposition und der Werkzeugübergabeposition unabhängig voneinander durchgeführt wird. Die Schritte werden nicht notwendigerweise in der angegebenen Reihenfolge ausgeführt. So kann insbesondere das Übergeben des ersten Werkzeugs von einem Werkzeugmagazin an das erste Speicherelement vor oder nach dem Übergeben des zweiten Werkzeugs aus einer Werkzeugmaschine an das zweite Speicherelement erfolgen. Eine Abfolge der Schritte erfolgt jeweils zweckmäßig derart, dass Wartezeiten insgesamt vermieden bzw. minimiert werden.

Weitere Vorteile und Merkmale der Erfindung ergeben sich aus der nachstehenden Beschreibung eines bevorzugten Ausführungsbeispiels der Erfindung sowie aus den abhängigen Ansprüchen. Die Erfindung wird nachstehend unter Bezugnahme auf die anliegenden Figuren anhand eines Ausführungsbeispiels näher erläutert.
- Fig. 1: zeigt Teile eines ersten Ausführungsbeispiels einer Werkzeugpufferanordnung in einer ersten perspektivischen Ansicht.
- Fig. 2: zeigt die Werkzeugpufferanordnung aus Fig. 1 in einer zweiten perspektivischen Ansicht.
- Fig. 3: zeigt die Werkzeugpufferanordnung aus Fig. 1 in einer Seitenansicht.
- Fig. 4: zeigt die Werkzeugpufferanordnung aus Fig. 1 in einer Fig. 3 entsprechenden Seitenansicht mit den Speicherelementen in anderer Position.

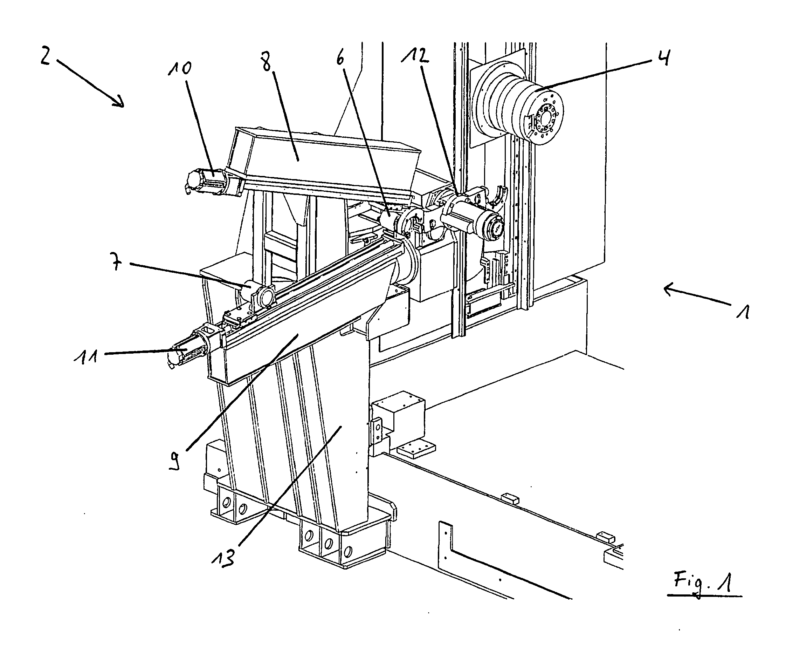

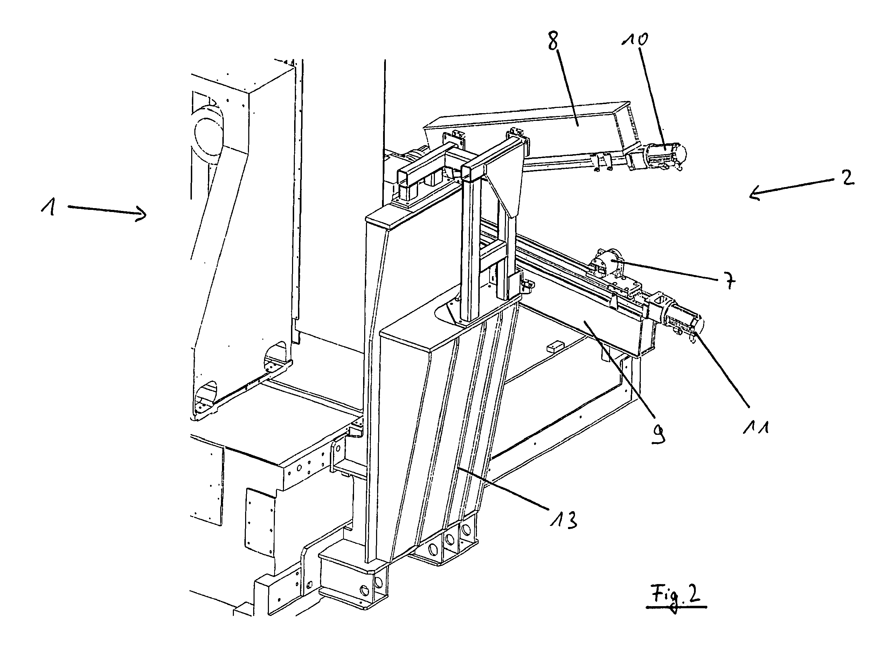

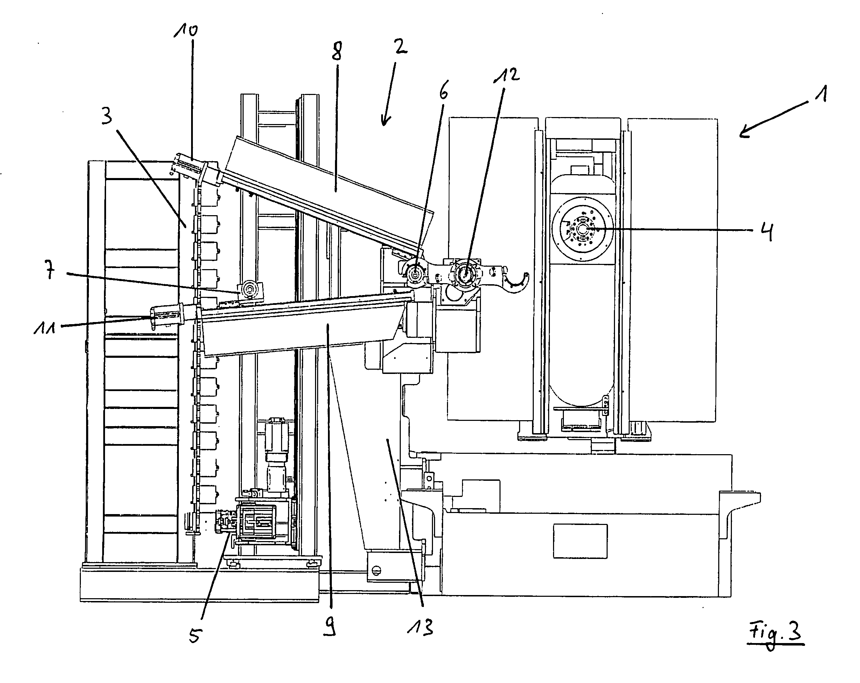

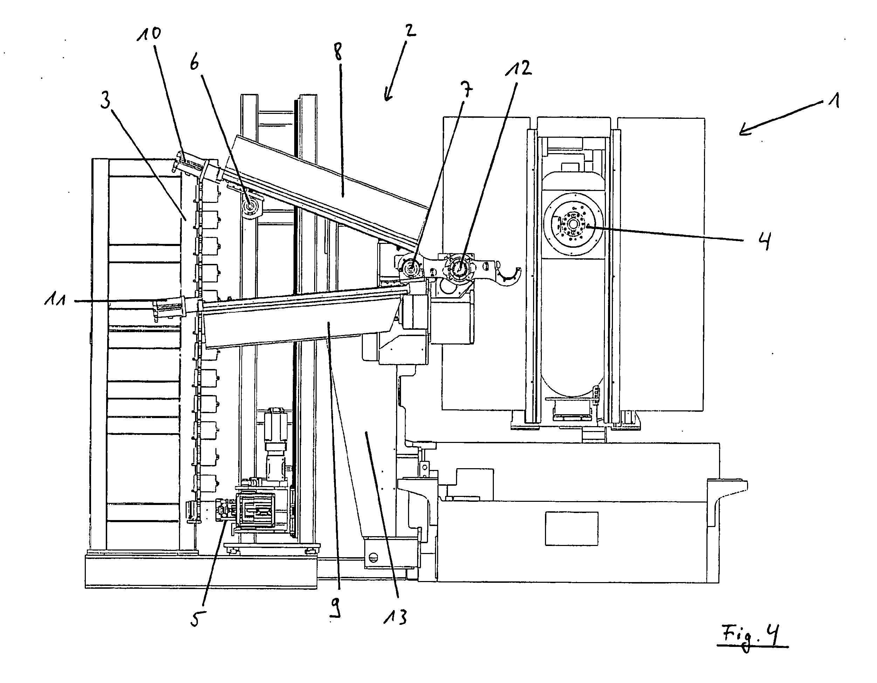

Fig. 1 bis Fig. 4 zeigen ein erstes Ausführungsbeispiel einer Werkzeugpufferanordnung 1, die beispielsweise zur Herstellung von Metallprodukten durch zerspanende Bearbeitung von soliden Metallkörpern verwendbar ist. Die Werkzeugpufferanordnung umfasst (wie insbesondere in Fig. 3 und Fig. 4 gut erkennbar ist) eine Werkzeugmaschine mit einer Arbeitsspindel 4, in die Werkzeuge zur zerspanenden Bearbeitung eines Metallkörpers einsetzbar sind, ein Werkzeugmagazin 3 zur Aufbewahrung von in die Arbeitsspindel 4 einsetzbaren Werkzeugen und eine Speichervorrichtung 2 zur Zwischenlagerung von Werkzeugen zwischen dem Werkzeugmagazin 3 und der Arbeitsspindel 4. In die Arbeitsspindel 4 aufgenommene Werkzeuge (nicht dargestellt) werden in Drehung versetzt, um eine zerspanende Bearbeitung eines Metallkörpers (nicht dargestellt), beispielsweise durch Fräsen, zu ermöglichen. Zur Bearbeitung des Metallkörpers werden in der Regel in einer gesteuerten Abfolge von Bearbeitungsschritten unterschiedliche Werkzeuge verwendet, die jeweils in bestimmter, durch die Steuerung vorgegebener Reihenfolge in die Arbeitsspindel 4 einzusetzen sind. Ein Austausch der Werkzeuge in der Arbeitsspindel 4 erfolgt, wie nachstehend näher erläutert wird, automatisiert. Ein jeweils benötigtes Werkzeug wird dabei durch eine Werkzeugtransportvorrichtung 5 aus dem Werkzeugmagazin 3 entnommen und in einen Bereich nahe der Arbeitsspindel 4 transportiert. Mittels einer Übergabevorrichtung 12 ist ein in der Arbeitsspindel 4 aufgenommenes Werkzeug aus dieser entnehmbar und durch ein weiteres Werkzeug ersetzbar. Die Speichervorrichtung 2 ermöglicht eine flexible Zwischenlagerung von zeitnah in die Arbeitsspindel 4 einzusetzenden Werkzeugen nahe zu der Übergabevorrichtung 12, um die für einen Werkzeugwechsel an der Arbeitsspindel 4 benötigte Zeit durch Bereitstellen des jeweils benötigten Werkzeugs in unmittelbarer räumlicher Nähe zu verkürzen.

Die Speichervorrichtung 2 umfasst ein erstes Speicherelement 6 und ein zweites Speicherelement 7. Jedes der Speicherelemente 6, 7 ist jeweils zur Aufnahme eines Werkzeugs ausgebildet. Vorliegend weist jedes der Speicherelemente 6, 7 eine Aufnahmeöffnung zur Aufnahme eines Halteabschnitts eines Werkzeugs bzw. eines Werkzeugträgers auf. Es versteht sich, dass alternativ zu einer standardisierten Aufnahmeöffnung andere Mittel zum Festhalten eines Werkzeugs an den Speicherelementen 6, 7 vorsehbar sind, beispielsweise ein klauenförmiges Greifwerkzeug.

Das erste Speicherelement 6 ist verlagerbar an einer ersten Führungsvorrichtung 8 aufgenommen. Die erste Führungsvorrichtung 8 weist ein erstes, der Übergabevorrichtung 12 zugewandtes Ende und ein zweites, von der Übergabevorrichtung 12 abgewandtes Ende auf. Die erste Führungsvorrichtung 8 ist bezüglich ihrer Längserstreckung in einer zu der Horizontalen geneigten Stellung an einer Haltevorrichtung 13 befestigt. Das erste Speicherelement 6 ist an einer bezüglich der Vertikalen nach unten weisenden Führungsfläche der ersten Führungsvorrichtung 8 derart verlagerbar aufgenommen, dass das Speicherelement 6 zwischen dem der Übergabevorrichtung 12 zugewandten ersten Ende und dem von der Übergabevorrichtung 12 abgewandten zweiten Ende der ersten Führungsvorrichtung 8 bewegbar ist. Die Position des ersten Speicherelements 6 nahe des ersten Endes der ersten Führungsvorrichtung 8 entspricht einer Werkzeugübergabeposition, in der ein in dem ersten Speicherelement 6 aufgenommenes Werkzeug an die Übergabevorrichtung 12 übergeben werden oder ein Werkzeug aus der Übergabevorrichtung 12 in das erste Speicherelement 6 übergeben werden kann. Umgekehrt entspricht die Position des ersten Speicherelements 6 nahe des zweiten Endes der ersten Führungsvorrichtung 8 einer ersten Werkzeugaustauschposition, in der ein Werkzeug von der Werkzeugtransportvorrichtung 5 an das erste Speicherelement 6 übergeben werden kann oder umgekehrt. Eine Bewegung des ersten Speicherelements 6 zwischen der Werkzeugübergabeposition und der ersten Werkzeugaustauschposition ist mittels einer ersten Antriebsvorrichtung 10, die vorliegend als Spindelantrieb ausgebildet ist, antreibbar.

Unterhalb der ersten Führungsvorrichtung 8 ist eine zweite Führungsvorrichtung 9 an der Haltevorrichtung 13 befestigt. Die zweite Führungsvorrichtung 9 weist ein erstes, der Übergabevorrichtung 12 zugewandtes Ende und ein zweites, von der Übergabevorrichtung 12 abgewandtes Ende auf. Das zweite Speicherelement 7 ist an einer bezüglich der Vertikalen nach oben weisenden Führungsfläche der zweiten Führungsvorrichtung 9 derart verlagerbar aufgenommen, dass das zweite Speicherelement 7 zwischen dem der Übergabevorrichtung 12 zugewandten ersten Ende und dem von der Übergabevorrichtung 12 abgewandten zweiten Ende der zweiten Führungsvorrichtung 9 bewegbar ist. Die Position des zweiten Speicherelements 7 nahe des ersten Endes der zweiten Führungsvorrichtung 9 entspricht der Werkzeugübergabeposition, in der ein Werkzeug zwischen dem zweiten Speicherelement 7 und der Übergabevorrichtung 12 übergebbar ist. Umgekehrt entspricht die Position des zweiten Speicherelements 7 nahe des zweiten Endes der zweiten Führungsvorrichtung 9 einer zweiten Werkzeugaustauschposition, in der ein Werkzeug zwischen der Werkzeugtransportvorrichtung 5 und dem zweiten Speicherelement 7 übergebbar ist. Eine Bewegung des zweiten Speicherelements 7 zwischen der Werkzeugübergabeposition und der zweiten Werkzeugaustauschposition ist mittels einer zweiten Antriebsvorrichtung 11, die vorliegend als Spindelantrieb ausgebildet ist, antreibbar. In Fig. 3 ist das erste Speicherelement 6 in der Werkzeugübergabeposition und das zweite Speicherelement 7 in der zweiten Werkzeugaustauschposition dargestellt. Umgekehrt befindet sich in der Darstellung in Fig. 4 das zweite Speicherelement 7 in der Werkzeugübergabeposition und das erste Speicherelement 6 in der ersten Werkzeugaustauschposition.

Die zweite Führungsvorrichtung 9 ist vorliegend bezüglich ihrer Längserstreckung gegen die Horizontale geneigt. Die nach unten weisende Führungsfläche der ersten Führungsvorrichtung 8 und die nach oben weisende Führungsfläche der zweiten Führungsvorrichtung 9 schließen gemeinsam einen Winkel ein, der ausgehend von dem ersten Ende der ersten Führungsvorrichtung 8 bzw. der zweiten Führungsvorrichtung 9 in Richtung weg von der Übergabevorrichtung 12 geöffnet ist. Die Größe des Winkels ist so gewählt, dass bei gleichzeitiger Aufnahme von Werkzeugen in dem ersten Speicherelement 6 und dem zweiten Speicherelement 7 die Werkzeuge aneinander vorbei bewegbar sind. Es versteht sich, dass eine Bewegung der Speicherelemente 6, 7 alternativ zu den in dem Ausführungsbeispiel vorgesehenen geradlinigen Bewegungsbahnen auch entlang von gekrümmten Bewegungsbahnen erfolgen kann. Eine Auswahl einer jeweils geeigneten Bewegungsbahn hängt insbesondere von der Größe der aufzunehmenden Werkzeuge und den zur Verfügung stehenden Platzverhältnissen ab. Vorteilhaft ist auch eine Nachrüstung der Speichervorrichtung 2 an Werkzeugmaschinen möglich, bei denen bisher Werkzeuge unmittelbar zwischen der Werkzeugtransportvorrichtung 5 und der Übergabevorrichtung 12 übergeben wurden. Durch Auswahl eines geeigneten Winkels zwischen den Führungsvorrichtungen 8, 9 und/oder durch Auswahl gekrümmter Bewegungsbahnen ist eine flexible Anpassung an vorgegebene Platzverhältnisse der Werkzeugpufferanordnung bei Nachrüstung möglich.

Die Bewegung des ersten Speicherelements 6 mittels der ersten Antriebsvorrichtung 10 und des zweiten Speicherelements 7 mittels der zweiten Antriebsvorrichtung 11 erfolgt jeweils autonom. Es versteht sich, dass eine geeignete Steuerung der Speicherelemente 6, 7 erfolgt, um Kollisionen von bewegten Werkzeugen oder eine gleichzeitige Bewegung der Speicherelemente 6, 7 in die Werkzeugübergabeposition zu verhindern.

Die Übergabevorrichtung 12 ist vorliegend als Drehhebel mit zwei in einem Winkel von 180° zueinander angeordneten Armen ausgebildet. In einem Verbindungsbereich der beiden Arme ist die Übergabevorrichtung 12 drehbar auf einer Antriebswelle aufgenommen. Die von der Antriebswelle abgewandten Enden der Arme weisen jeweils eine Greifvorrichtung für Werkzeuge auf.

Ein Werkzeugwechsel kann beispielsweise wie folgt durchgeführt werden:
In dem Werkzeugmagazin 3 wird eine Vielzahl von Werkzeugen zur Anwendung in der Arbeitsspindel 4 bereitgehalten. Im Betrieb der Werkzeugmaschine ist ein Werkzeug in der Arbeitsspindel 4 aufgenommen. Die Übergabevorrichtung 12 befindet sich in einer Drehstellung, in der ein erster Arm der Übergabevorrichtung 12 der Arbeitsspindel 4 zugewandt ist und der zweite Arm sich in einer von der Arbeitsspindel 4 abgewandten Position befindet. Die Greifvorrichtung des ersten Arms ist leer, während in der Greifvorrichtung des zweiten Arms das für den nächsten Arbeitsschritt benötigte Werkzeug aufgenommen ist. Die Greifvorrichtung des ersten Arms befindet sich in einer Position, in der das in der Arbeitsspindel 4 aufgenommene Werkzeug unmittelbar in der Greifvorrichtung aufnehmbar ist. Die Greifvorrichtung des zweiten Arms befindet sich in einer Position, die der Werkzeugübergabeposition der Speichervorrichtung 2 entspricht. Um das Werkzeug in der Arbeitsspindel 4 auszuwechseln, wird das Werkzeug von der Greifvorrichtung des ersten Arms gegriffen und die Übergabevorrichtung 12 mittels der Antriebswelle um 180° gedreht. Das bisher verwendete Werkzeug gelangt so in die Werkzeugübergabeposition der Speichervorrichtung 2 und das als nächstes zu verwendende Werkzeug wird in die Arbeitsspindel 4 eingebracht. Das erste Speicherelement 6 wird mittels der ersten Antriebsvorrichtung 10 in die Werkzeugübergabeposition am ersten Ende der ersten Führungsvorrichtung 8 bewegt und übernimmt das benutzte Werkzeug. Das benutzt Werkzeug wird anschließend von dem ersten Speicherelement 6 in die erste Werkzeugaustauschposition bewegt und dort von der Werkzeugtransportvorrichtung 5 übernommen, um in das Werkzeugmagazin 3 transportiert zu werden. Gleichzeitig wird ein nachfolgend zu benutzendes Werkzeug, das zuvor von der Werkzeugtransportvorrichtung 5 von dem Werkzeugmagazin 3 zu dem zweiten Speicherelement 7 transportiert und in der zweiten Werkzeugaustauschposition an das zweite Speicherelement 7 übergeben wurde, von dem zweiten Speicherelement 7 in die Werkzeugübergabeposition bewegt und dort an die Übergabevorrichtung 12 übergeben. Das nachfolgend zu benutzende Werkzeug steht damit nach sehr kurzer Zeit für ein Einwechseln in die Arbeitsspindel 4 bereit.

Der folgende Austausch des in der Arbeitsspindel 4 aufgenommenen Werkzeugs findet mit entsprechend vertauschter Funktion des ersten Speicherelements 6 und des zweiten Speicherelements 7 statt, so dass das benutzte Werkzeug mittels des zweiten Speicherelements 7 in die zweite Werkzeugaustauschposition zum Weitertransport in das Werkzeugmagazin 3 bewegt wird und das erste Speicherelement 6 ein als nächstes zu benutzendes Werkzeug nach Übernahme von der Werkzeugtransportvorrichtung 5 in die Werkzeugübergabeposition bewegt wird.

Durch die Speichervorrichtung 2 wird die für den Werkzeugtausch in der Arbeitsspindel 4 insgesamt benötigte Zeit wesentlich verkürzt, da stets das als nächstes zu benutzende Werkzeug in der Werkzeugübergabeposition bereit gehalten wird. Das als nächstes zu benutzende Werkzeug wird dabei stets in der Speichervorrichtung 2 zwischengespeichert. Durch den relativ langsamen Transport mittels der Werkzeugtransportvorrichtung 3 bedingte Wartezeiten herkömmlicher Werkzeugpufferanordnungen, bei denen Werkzeuge unmittelbar von der Werkzeugtransportvorrichtung 3 an die Übergabevorrichtung 12 übergeben werden, sind so vorteilhaft vermieden.

Vorstehend wurde die Erfindung anhand eines Ausführungsbeispiels erläutert, bei dem eine als Drehhebel ausgebildete Übergabevorrichtung mit zwei Armen vorgesehen ist. Es versteht sich, dass alternativ eine direkte Übergabe von Werkzeugen in der Werkzeugübergabeposition der Speichervorrichtung an die Arbeitsspindel möglich ist. Es versteht sich ferner, dass eine Übergabevorrichtung mit mehr als zwei Armen vorgesehen werden kann, beispielsweise mit drei oder vier Armen, um eine zusätzliche Zwischenlagerung von Werkzeugen in der Übergabevorrichtung zu ermöglichen.

Das vorstehend erläuterte Ausführungsbeispiel weist zwei separate Führungsvorrichtungen, jeweils eine für jedes Speicherelement, auf. Es versteht sich, dass das erste Speicherelement und das zweite Speicherelement auch entlang einer gemeinsamen Führungsvorrichtung verlagerbar sind, beispielsweise entlang von zwei sich gegenüberliegenden Führungsflächen eines im Bereich des Winkels angeordneten Führungskörpers. Es versteht sich ferner, dass mehr als zwei Speicherelemente und/oder Führungsvorrichtungen vorsehbar sind, wobei die Anzahl möglicher Speicherelemente vor allem durch den zur Verfügung stehenden Bauraum, insbesondere hinsichtlich einer gemeinsamen Werkzeugübergabeposition, begrenzt ist.

## Patentansprüche

1. Speichereinrichtung zur Zwischenlagerung von Werkzeugen zwischen einem Werkzeugmagazin (3) und einer Werkzeugmaschine, enthaltend
wenigstens ein erstes Speicherelement (6) und ein zweites Speicherelement (7) zur Aufnahme eines Werkzeugs,
wobei das erste Speicherelement (6) zwischen einer ersten Werkzeugaustauschposition und einer Werkzeugübergabeposition verlagerbar ist,
wobei das zweite Speicherelement (7) zwischen einer zweiten Werkzeugaustauschposition und der Werkzeugübergabeposition verlagerbar ist,
wobei das erste Speicherelement (6) und das zweite Speicherelement (7) unabhängig voneinander zwischen Werkzeugaustauschposition und Werkzeugübergabeposition verlagerbar sind,
wobei das erste Speicherelement (6) und das zweite Speicherelement (7) jeweils entlang einer ersten Führungsvorrichung (8) und einer zweiten Führungsvorrichtung (9) verlagerbar ist,
wobei die erste Führungsvorrichtung (8) und die zweite Führungsvorrichtung (9) derart ausgebildet sind, dass eine Übergabevorrichtung (12) zur Übergabe des Werkzeugs an die Werkzeugmaschine vorgesehen sein kann,
**dadurch gekennzeichnet,**
**dass** die zweite Führungsvorrichtung (9) bezüglich ihrer Längserstreckung gegen die Horizontale geneigt ist,
und **dass** eine nach unten weisende Führungsfläche der ersten Führungsvorrichtung (8) und eine nach oben weisende Führungsfläche der zweiten Führungsvorrichtung (9) gemeinsam einen Winkel einschließen, der ausgehend von einem ersten Ende der ersten Führungsvorrichtung (8) bzw. der zweiten Führungsvorrichtung (9) in Richtung weg von der Übergabevorrichtung (12) geöffnet ist.

2. Speichereinrichtung nach Anspruch 1, **dadurch gekennzeichnet, dass** das erste Speicherelement (6) und/oder das zweite Speicherelement (7) eine an die Werkzeuge angepasste Werkzeugaufnahme aufweist.

3. Speichereinrichtung nach Anspruch 1 oder 2, **dadurch gekennzeichnet, dass** das erste Speicherelement (6) und/oder das zweite Speicherelement (7) eine jeweils separate Antriebsvorrichtung (10, 11) zum Antrieb einer Verlagerungsbewegung zwischen der Werkzeugaustauschposition und der Werkzeugübergabeposition aufweist.

4. Speichereinrichtung nach Anspruch 3, **dadurch gekennzeichnet, dass** die Antriebsvorrichtung (10, 11) als Zahnriemenantrieb, Spindelantrieb, Kettenantrieb, elektromotorischer Antrieb oder pneumatischer Antrieb ausgebildet ist.

5. Werkzeugpufferanordnung, enthaltend eine Speichereinrichtung (2) zur Zwischenlagerung von Werkzeugen nach einem der Ansprüche 1 bis 4.

6. Werkzeugpufferanordnung nach Anspruch 5, umfassend eine der Werkzeugübergabeposition zugeordnete Übergabevorrichtung (12).

7. Werkzeugpufferanordnung nach Anspruch 6, **dadurch gekennzeichnet, dass** die Übergabevorrichtung (12) als wenigstens zweiarmiger Drehhebel ausgebildet ist.

8. Werkzeugpufferanordnung nach einem der Ansprüche 5 bis 7, weiter enthaltend eine wenigstens einer von erster Werkzeugaustauschposition und zweiter Werkzeugaustauschposition zugeordnete Werkzeugtransportvorrichtung (5).

9. Verwendung einer Speichereinrichtung (2) nach einem der Ansprüche 1 bis 4 zum Austausch eines Werkzeugs in einer Werkzeugmaschine,
**dadurch gekennzeichnet,**
**dass** ein Übergeben eines ersten Werkzeugs von einem Werkzeugmagazin (3) an ein erstes Speicherelement (6) in einer räumlich definierten ersten Werkzeugaustauschposition, und ein Übergeben eines zweiten Werkzeugs aus einer Werkzeugmaschine an ein zweites Speicherelement (7) in einer räumlich definierten Werkzeugübergabeposition, in einer beliebigen Reihenfolge erfolgt, und durch ein Übergeben des ersten Werkzeugs von dem ersten Speicherelement (6) an die Werkzeugmaschine in der Werkzeugübergabeposition, und ein Übergeben des zweiten Werkzeugs von dem zweiten Speicherelement (7) an das Werkzeugmagazin (3) in einer räumlich definierten zweiten Werkzeugaustauschposition, wobei eine Bewegung des ersten Speicherelements (6) zwischen der ersten Werkzeugaustauschposition und der Werkzeugübergabeposition und eine Bewegung des zweiten Speicherelements (7) zwischen der zweiten Werkzeugaustauschposition und der Werkzeugübergabeposition unabhängig voneinander durchgeführt wird.

10. Verwendung nach Anspruch 9, **dadurch gekennzeichnet, dass** die Übergabe des ersten Werkzeugs zwischen Werkzeugmagazin (3) und erstem Speicherelement (6) mittels einer Werkzeugtransportvorrichtung erfolgt.

11. Verwendung nach Anspruch 9 oder 10, **dadurch gekennzeichnet, dass** die Übergabe des ersten Werkzeugs zwischen der Werkzeugmaschine und dem ersten Speicherelement (6) mittels einer Übergabevorrichtung erfolgt.

## Claims

1. A storage device for the intermediate storage of tools between a tool magazine (3) and a machine tool, containing
at least a first storage element (6) and a second storage element (7) for receiving a tool,
wherein the first storage element (6) can be displaced between a first tool exchange position and a tool transfer position,
wherein the second storage element (7) can be displaced between a second tool exchange position and the tool transfer position,
wherein the first storage element (6) and the second storage element (7) can be displaced independently of one another between tool exchange position and tool transfer position,
wherein the first storage element (6) and the second storage element (7) can each be displaced along a first guide device (8) and a second guide device (9),
wherein the first guide device (8) and the second guide device (9) are constructed in such a way that a transfer device (12) can be provided for transferring the tool to the machine tool,
**characterised in**
**that** the second guide device (9) is inclined against the horizontal with respect to its longitudinal extent,
and **that** a downwardly facing guide face of the first guide device (8) and an upwardly facing guide face of the second guide device (9) together include an angle which, starting from a first end of the first guide device (8) respectively the second guide device (9), is open in the direction away from the transfer device (12).

2. The storage device according to Claim 1, **characterised in that** the first storage element (6) and/or the second storage element (7) has a tool holder adapted to the tools.

3. The storage device according to Claim 1 or 2, **characterised in that** the first storage element (6) and/or the second storage element (7) each has a separate drive device (10, 11) for driving a displacing movement between the tool exchange position and the tool transfer position.

4. The storage device according to Claim 3, **characterised in that** the drive device (10, 11) is constructed as a belt drive, spindle drive, chain drive, electromotive drive or pneumatic drive.

5. A tool buffer arrangement, containing a storage device (2) for the intermediate storage of tools according to one of Claims 1 to 4.

6. The tool buffer arrangement according to Claim 5, comprising a transfer device (12) assigned to the tool transfer position.

7. The tool buffer arrangement according to Claim 6, **characterised in that** the transfer device (12) is constructed as at least a two-armed pivoted lever.

8. A tool buffer arrangement according to one of Claims 5 to 7, further containing a tool transport device (5) assigned to at least one of first tool exchange position and second tool exchange position.

9. The use of a storage device (2) according to one of Claims 1 to 4 for exchanging a tool in a machine tool,
**characterised in**
**that** a transfer of a first tool from a tool magazine (3) to a first storage element (6) in a spatially defined first tool exchange position, and a transfer of a second tool from a machine tool to a second storage element (7) in a spatially defined tool transfer position, takes place in any order and by a transfer of the first tool from the first storage element (6) to the machine tool in the tool transfer position and a transfer of the second tool from the second storage element (7) to the tool magazine (3) in a spatially defined second tool exchange position, wherein a movement of the first storage element (6) between the first tool exchange position and the tool transfer position and a movement of the second storage element (7) between the second tool exchange position and the tool transfer position are carried out independently of one another.

10. The use according to Claim 9, **characterised in that** the transfer of the first tool between the tool magazine (3) and the first storage element (6) takes place by means of a tool transport device.

11. The use according to Claim 9 or 10, **characterised in that** the transfer of the first tool between the machine tool and the first storage element (6) takes place by means of a transfer device.

## Revendications

1. Dispositif de stockage destiné à entreposer temporairement des outils entre un magasin d'outils (3) et une machine-outil, ledit dispositif contenant
au moins un premier élément de stockage (6) et un deuxième élément de stockage (7) destinés à recevoir un outil,
le premier élément de stockage (6) pouvant être déplacé entre une première position d'échange d'outils et une position de transfert d'outils,
le deuxième élément de stockage (7) pouvant être déplacé entre une deuxième position d'échange d'outils et la position de transfert d'outils,
le premier élément de stockage (6) et le deuxième élément de stockage (7) pouvant être déplacés entre la première position d'échange d'outils et la position de transfert d'outils indépendamment l'un de l'autre,
le premier élément de stockage (6) et le deuxième élément de stockage (7) pouvant être déplacés respectivement le long d'un premier dispositif de guidage (8) et d'un deuxième dispositif de guidage (9),
le premier dispositif de guidage (8) et le deuxième dispositif de guidage (9) étant conformés de manière à ce qu'un dispositif de transfert (12) puisse être prévu pour transférer l'outil à la machine-outil,
**caractérisé en ce**
**que** le deuxième dispositif de guidage (9) est incliné, quant à son extension longitudinale, par rapport à l'horizontale,
et **qu'**une surface de guidage, dirigée vers le bas, du premier dispositif de guidage (8) et une surface de guidage, dirigée vers le haut, du deuxième dispositif de guidage (9) forment conjointement un angle qui est ouvert depuis une première extrémité du premier dispositif de guidage resp. du deuxième dispositif de guidage (9) dans une direction opposée au dispositif de transfert (12).

2. Dispositif de stockage selon la revendication 1, **caractérisé en ce que** le premier élément de stockage (6) et/ou le deuxième élément de stockage (7) comporte un logement d'outils adaptés aux outils.

3. Dispositif de stockage selon la revendication 1 ou 2, **caractérisé en ce que** le premier élément de stockage (6) et/ou le deuxième élément de stockage (7) comporte chacun un dispositif d'entraînement séparé (10, 11) destiné à impulser un mouvement de déplacement entre la position d'échange d'outils et la position de transfert d'outils.

4. Dispositif de stockage selon la revendication 3, **caractérisé en ce que** le dispositif d'entraînement (10, 11) est conformé en entraînement par courroie crantée, en entraînement par mandrin, en entraînement par chaîne, en entraînement par moteur électrique ou en entraînement pneumatique.

5. Structure tampon d'outils, contenant un dispositif de stockage (2) destiné à entreposer temporairement des outils selon l'une des revendications 1 à 4.

6. Structure tampon d'outils selon la revendication 5, comportant un dispositif de transfert (12) associé à la position de transfert d'outils.

7. Structure tampon d'outils selon la revendication 6, **caractérisée en ce que** le dispositif de transfert (12) est conformé en levier rotatif comportant au moins deux bras.

8. Structure tampon d'outils selon l'une des revendications 5 à 7, contenant en outre un dispositif de transport d'outils (5) associé à au moins une position parmi la première position d'échange d'outils et la deuxième position d'échange d'outils.

9. Utilisation d'un dispositif de stockage (2) selon l'une des revendications 1 à 4 pour échanger un outil dans une machine-outil,
**caractérisée**
**en ce qu'**un transfert d'un premier outil depuis un magasin d'outils (3) vers un premier élément de stockage (6) dans une première position d'échange d'outils spatialement définie, et un transfert d'un deuxième outil depuis une machine-outil vers un deuxième élément de stockage (7) dans une position de transfert d'outils spatialement définie, sont effectués dans un ordre quelconque, et
par un transfert du premier outil depuis le premier élément de stockage (6) vers la machine-outil dans la position de transfert d'outils et un transfert du deuxième outil depuis le deuxième élément de stockage (7) vers le magasin d'outils (3) dans une deuxième position d'échange d'outils spatialement définie, un mouvement du premier élément de stockage (6) entre la première position d'échange d'outils et la position de transfert d'outils et un mouvement du deuxième élément de stockage (7) entre la deuxième position d'échange d'outils et la position de transfert d'outils étant effectués indépendamment l'un de l'autre.

10. Utilisation selon la revendication 9, **caractérisée en ce que** le transfert du premier outil entre le magasin d'outils (3) et le premier élément de stockage (6) est effectué au moyen d'un dispositif de transport d'outils.

11. Utilisation selon la revendication 9 ou 10, **caractérisée en ce que** le transfert du premier outil entre la machine-outil et le premier élément de stockage (6) est effectué au moyen d'un dispositif de transfert.
